# EUROPÄISCHE PATENTSCHRIFT

(11) **EP 0 892 200 B1**
(45) Veröffentlichungstag und Bekanntmachung des Hinweises auf die Patenterteilung: **27.12.2000**
(21) Anmeldenummer: 98118454.2
(22) Anmeldetag: 30.09.1998
(51) Int. Cl.: F16K 11/044, F25B 41/04

(54) **Kompressorabsperrventil**
Compressor shut-off valve
Vanne d'arrêt pour compresseur

(30) Priorität: 09.07.1998 DE 19830612
(43) Veröffentlichungstag der Anmeldung: 20.01.1999
(73) Patentinhaber: Firma Altenburger Armaturenwerk und Metallgiesserei GmbH, 04600 Altenburg (DE)
(72) Erfinder: Dobmaier, Jürgen, 04617 Rositz (DE)
(74) Vertreter: Amthor, Manfred W. J.

(56) Entgegenhaltungen:
- WO-A-95/08462
- DE-A- 4 323 334
- DE-A- 4 332 538
- DE-A- 19 531 718
- US-A- 3 633 380
- US-A- 3 777 783
- US-A- 4 521 948

## Beschreibung

Die Erfindung betrifft ein Kompressorabsperrventil für korrosive und nichtkorrosive Stoffströme der industriellen Kälte- und Klimatechnik, insbesondere für gewichts- und raumminimierte mobile Anlagenträger, wie beispielsweise Fahrzeuge und Transportmittel aller Art, dargestellt am Beispiel eines sogenannten Eck-Absperrventiles.
Derartige Kompressorabsperrventile sind regelmäßig als separate Baugruppe außerhalb des Kompressors und innerhalb des Kältemittelkreislaufes über zwei Leitungsanschlüsse fest und vorzugsweise lösbar angeordnet, wobei die manuell einstellbare Position des Absperrventiles drei Schaltstellungen aufweist.

### Erstens:

Geschlossene Endlagenstellung, die die beiden Leitungsanschlüsse des Kältemittelkreislaufes trennt und einen Leitungsanschluß zu zwei peripheren, verschließbaren Ventilgehäuseöffnungen frei gibt.

### Zweitens:

Neutrale offene Mittelstellung, bei der alle Leitungsanschlüsse des Kältemittelkreislaufes und die peripheren, verschließbaren Ventilgehäuseöffnungen miteinander verbunden sind.

### Drittens:

Offene Endlagenstellung, bei der die beiden Leitungsanschlüsse des Kältemittelkreislaufes untereinander, sowie mit einer der beiden peripheren, verschließbaren Ventilgehäuseöffnungen, verbunden sind, während der nach außen führende Ventilstößelschaft und die in ihr mündende zweite periphere, verschließbare Ventilgehäuseöffnung, verschlossen sind.

Der Stand der Technik zeigt dabei ein dichtes Feld einander ähnlicher Lösungen, die den ständig wachsenden neuen Anforderungen an Kompaktheit, minimierte Masse, unbeschränkten Kältemitteleinsatz, Korrosions- und Verschleißbeständigkeit, Funktionssicherheit und ökonomische Herstellung einschließlich Montage innerhalb mobiler Anlagenträger jedoch nur unzureichend entsprechen.

So sind bereits ältere, aus kadmierten Stahl-Einzelteilen montierte Absperrventile mit festem oder angeschraubten Flansch, radialem Manometeranschluß mit Bördelverschraubung und einlötbaren CU-Rohr bekannt, die jedoch, ungeachtet zusätzlich eingeschränkter Kältemitteltauglichkeit, den Anforderungen ökonomischer Technologie in keiner Weise mehr entsprechen. (Prospekt "NOBIS", 1970, Seite 8.)
Andere bereits bekannte Kompressorabsperrventile in Eckform sind ebenfalls ausschließlich für stationäre Anlagen ausgebildet. (MAW-Information "Armaturen", 1987, Fig. D) Weitere bekannte Kompressorabsperrventile aus Schmiedestahl sind nur für nichtkorrosive Gase und Flüssigkeiten einsetzbar und infolge des hohen Masseeinsatzes für die Einsatzbedingungen mobiler Anlagenträger zusätzlich gänzlich ungeeignet.
(GRASSO, Datenblatt Nr. 7/80, Typ TAH 8; Typ TAHM)

Auch jüngere bekannte Kompressor-Eck-Absperrventile verschraubter oder verschweißter, oder verschraubter und verschweißter Einzelteilelemente aus Stahl entsprechen, abgesehen von gegenüber dem erfindungsgemäßen Kompressorabsperrventil abweichendem konstruktivem Aufbau von Gehäuse und Ventilelementen, nicht den gestellten aktuellen Anforderungen. (HERL, 10/91, 2.17; 2.34)

In weiteren Betracht gezogen:
DE-OS 195 31 718 A1; Zusammenfassung;
DE-OS 43 32 538 A1; Zusammenfassung und Patentanspruch 1;
WO 95/08462; Patentanspruch 1;
DE-OS 43 30 616; Zusammenfassung, Satz 2.; Spalte 3, Z. 10-13.

Bekannt ist gemäß US 3,777,783 insbesondere auch ein für Kopressorabsperrventile dieser Art in Betracht zu ziehendes "Ventil und Methode zur Herstellung desselben", das zwei periphere Ventilgehäuseöffnungen für disponible Zugänge zum Kältemittelkreislauf aufweist, das aber auf Grund der Mehrstückigkeit des Ventilgehäuses die erfindungsgemäß kompakte Anordnung derartiger externen Anschlüsse am Ventilgehäuse nicht aufweist und wegen der Schnittstellen der einzelnen zu verbindenden Ventilgehäuseabschnitte grundsätzlich auch nicht aufweisen kann.
So ist es einem Ventil gem. US 3,777,783 weder möglich, die beiden bezeichneten peripheren Anschlüsse in einer gemeinsamen Ebene, noch innerhalb des durch die Hauptanschlüsse des Kältemittelkreislaufes vorgegeben maximalen Raumbedarfes des Ventilgehäuses, anzuordnen.
Damit benötigt ein solches Ventil für Anordnung und betriebsbedingten Zugang zumindest eines der beiden peripheren Ventilgehäuseöffnungen zusätzlichen Raumbedarf in einer Ebene, die für die Funktion der Hauptanschlüsse des Ventiles an sich nicht beansprucht ist. Das ist insbesondere für mobile Anlagenträger, wie Fahrzeuge u.a., von erheblich negativer Auswirkung.

Aufgabe der Erfindung ist deshalb die Schaffung eines Kompressorabsperrventiles, das sich durch hervorragende bauliche Kompaktheit und minimierten Raumbedarf auszeichnet und damit die neuen Anforderungen, insbesondere von Klima- und Kälteanlagen mobiler Anlagenträger, perfekt erfüllt.

Erfindungsgemäß besteht die Lösung der Aufgabe in der Schaffung eines Kompressorabsperrventiles für korrosive und nichtkorrosive Stoffströme der industriellen Kälte- und Klimatechnik, insbesondere für gewichts- und raumminimierte mobile Anlagenträger, wie beispielsweise Fahrzeuge und Transportmittel aller Art, bestehend aus einem einstückigen Ventilgehäuse (1) mit zwei Ventilgehäusebohrungen (6,7) zur festen und lösbaren Anordnung mittels zweier Flanschanschlüsse (2,3) innerhalb eines Kältemittelkreislaufes außerhalb an einem Anlagenkompressor, wobei der Durchmesser einer Ventilgehäusebohrung (7) größer ist als der Durchmesser eines Kegelventiles (10), so dass die Montage eines Kegelventiles (10) und eines Ventilstößels (11) innerhalb des Ventilgehäuses (1) erfolgt; sowie zwei peripheren, verschließbaren Ventilgehäuseöffnungen (8,9) für disponible Zugänge zum Kältemittelkreislaufsystem des Ventilgehäuses (1); einem koaxial zu einer der beiden Ventilgehäusebohrungen (6,7) angeordneten, durch einen Ventilstößel (11) manuell betätigbarem Kegelventil (10) mit beidseitigen Kegel-flächen zur fakultativen Abdichtung einer Ventilgehäusebohrung (6) einerseits; oder eines koaxial zu einer der Ventilgehäusebohrungen (6,7) nach außen führenden Ventilstößelschaftes (22) und einer in ihm mündenden peripheren Ventilgehäuseöffnung (9) andererseits; sowie einer verschraubbaren, hohlzylindrischen und selbstdichtenden Verschlusskappe (15) des Ventilstößelschaftes (22) von mindestens der axialen Länge des maximalen Ventilhubes eines Ventilstößels (11), wobei die peripheren Ventilgehäuseöffnungen (8,9) in der Ebene der parallel zum Ventilstößelschaft verlaufenden Flanschachse (4) des Ventilgehäuseflansches (2) und in axialer und radialer Ausdehnung um den Ventilstößelschaft (22), sowie innerhalb der maximalen äußeren Abmessungen des Ventilgehäuses (1), angeordnet sind, und, dass eine der peripheren Ventilgehäuseöffnungen (8 oder 9) direkt im Ventilgehäuse (1) mündet und eine der peripheren Ventilgehäuseöffnungen (8 oder 9) in einen zentrisch um die flanschnahe Seite des Ventistößelschaftes (22) verlaufenden Ringquerschnitt (42) des Ventilstößelschaftes (22) mündet, so dass beide Ventilgehäuseöffnungen (8,9) am Umfang des Ventilstößelschaftes beliebig verteilt anordenbar sind, sowie, daß die Ventilgehäuseflansche (2,3) und ein Hauptdichtkegel (17) der Ventilgehäusebohrung (6) des Ventilgehäuses (1); ein Dichtkegel (26) des Ventilstößelschaftes (22); ein Dichtkegel (18) für die Verschlusskappe (15); sowie zwei Dichtkegel (37) und (38) der perpheren Gehäuseöffnungen (8,9), mit dem Ventilgehäuse (1) aus einstückigem Leichtmetall, beispielsweise aus einem AL-Strangpreßhalbzeug, gefertigt sind.

In zweckmäßiger Ausgestaltung der Erfindung nach Patentanspruch 1 ist es vorteilhaft, daß der Ventilbund 31 des Ventilstößels 11 und das Kegelventil 10 mit dem Sprengring 19 mit radialem und axialen Spiel gepaßt und montiert sind, derart, daß das Kegelventil 10 auf dem Hauptdichtkegel 17 verspannungsfrei, selbstzentrierend dichtend, aufsitzt, so daß die für eine funktionsbedingte Differenz zwischen Ventilbetriebskraft und Ventilsitzkraft erforderliche, manuell einbringbare Spindelkraft des Ventilstößels 10, bei verbesserter Dichtung relativ reduziert ist; und ferner, daß der rückwärtige Strömungskegel des Kegelventils (10) um einen Winkelbetrag γ von der Normalen der Flanschachse 4 und der Ventilgehäusebohrung 6 abweicht.

Das erfindungsgemäße Kompressorabsperrventil ist nachstehend näher beschrieben. Die dazugehörige Zeichnung zeigt in
- Fig. 1:: das Kompressorabsperrventil in einem Schnitt außerhalb der Ebene der peripheren Ventilgehäuseöffnungen,
- Fig. 2:: das Kompressorabsperrventil in einem Teilschnitt einer Ebene beider peripheren Ventilgehäuseöffnungen mit Außengewinde,
- Fig. 3:: das Kompressorabsperrventil mit um 180 Grad versetzten peripheren Ventilgehäuseöffnungen gem. Fig. 2 im Teilschnitt,
- Fig. 4:: das Kompressorabsperrventil mit alternativen Innengewindeanschlüssen der peripheren Ventilgehäuseöffnungen

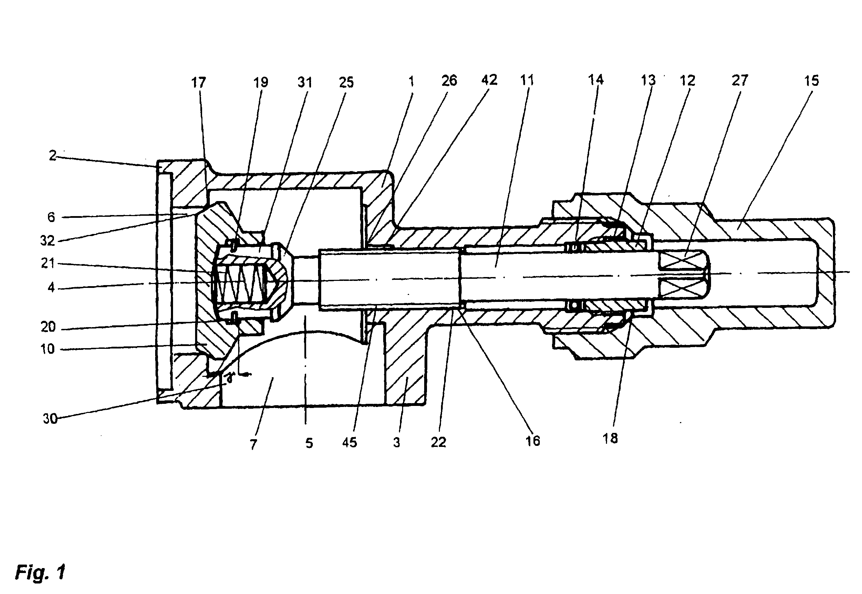

Das vollständig einstückig, beispielsweise aus Leichtmetall hergestellte Ventilgehäuse 1 des Kompressorabsperrventiles gem. Fig.1, besitzt zwei beispielsweise rechtwinklig zueinander verlaufende Ventilgehäusebohrungen 6, 7, die als Leitungen eines nicht näher dargestellten Kältemittelkreislaufes fungieren.
Ein hier beispielsweise dargestelltes sogenanntes Eckabsperrventil betrifft jedoch lediglich eine bevorzugte Ausführungsform der Erfindung. Von dieser sogenannten Eckform abweichende Anordnungen der Ventilgehäusebohrungen 6, 7 sind ebenfalls unter Anwendung der Erfindung möglich.
Das Ventilgehäuse 1 ist dabei über die beiden, koaxial zu den Ventilgehäusebohrungen 6, 7 verlaufenden Ventilgehäuseflansche 2, 3 der Flanschachsen 4, 5, druckdicht und druckfest mit dem Kältemittelkreislauf durch Verschraubungen verbunden, wobei sowohl Durchgangsbohrungen 33, 34 des Ventigehäuseflansches 3, wie auch in dem längs der Achsen 35, 36 verlaufende Gewindesacklöcher des Ventilgehäuseflansches 2 angeodnet sind.

Der am rückwärtigen Bund der Ventilgehäusebohrung 6 angeordnete Hauptdichtkegel 17 ist zur druckdichten und druckfesten Aufnahme eines Kegelventiles 10 vorgesehen, letzteres über einen Ventilstößelschaft 20 des Kegelventiles 10, einen Ventilbund 31 des Ventilstößels 11, über einen in einer kegelventilseitigen Sprengringnut und einer entsprechenden ventilstößelseitigen Sprengringnut sitzenden Sprengring 19 befestigt ist.
Der Ventilstößel 11 ist einmal über die mit Außengewinde 13 im Ventilstößelschaft 22 des Ventilgehäuses 1 festsitzende und mittels Dichtung 14 verschlossene Stopfbuchse 12, und über den Ventilbund 31 des Ventilstößels 11 im Ventilgehäuse 1 gelagert, sowie über den Gewindetrieb 45 des Ventilstößelschaftes 22 zur Übertragung axialer Spindelkräfte hubbeweglich gelagert. Dabei ist der Ventilbund 31 gegen eine vorgespannte Druckfeder 21 mit begrenzt radialem und axialen Spiel gepaßt und montiert und über die Krümmung des Innenkegels 32 des Kegelventils 10 an der selbstzentrierenden Dichtung eines Hauptdichtkegels 17 des Ventilgehäuses 1 beteiligt, wobei das Kegelventil 10 vorteilhafter Weise mit einem unter einem Winkel (γ) verlaufenden rückwärtigen Srömungskegel 30 ausgestattet ist.
Durch entsprechende Betätigung des Ventilstößels 11 mittels einer Schlüsselfläche 27 gelangt der Dichtkegel 25 des Ventilstößels 11 zur Verschlußposition am Dichtkegel 26 des Ventilstößelschaftes 22, wodurch die Ventilgehäusebohrungen 6, 7 untereinander verbunden, gegen einen Ringquerschnitt 42 des Ventilstößelschaftes 22 des Ventilgehäuses 1, sowie der Ventilstößelschaft 22 selbst, gegen beide Ventilgehäusebohrungen 6, 7 verschlossen sind. Zusätzlich zu der Stopfbuchse 12 mit einer Dichtung 14 ist der Ventilstößelschaft 22 noch durch eine über eine Schlüsselfläche 39 aufschraubbare, relativ druckfeste und druckdichte Verschlußkappe 15 über einen Dichtkegel 18 verschlossen.

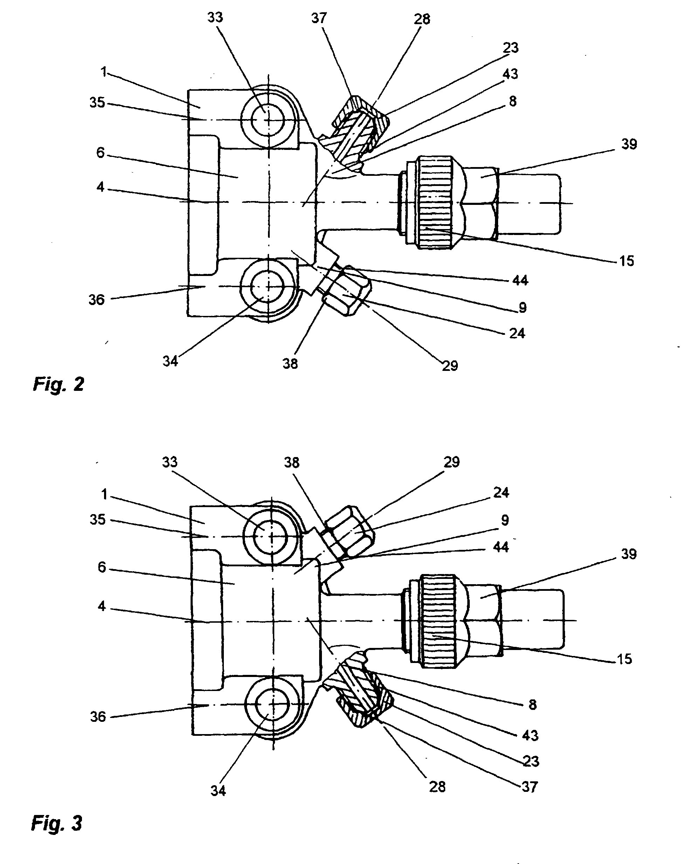

Fig. 2 zeigt zwei periphere Ventilgehäuseöffnungen 8, 9 für disponible, hier mit Dichtkegel 37, 38 über Außengewinde 43, 44 aufschraubbare Blindmuttern 23, 24, verschließbare Ventilgehäusezugänge. Dabei mündet die Ventilgehäuseöffnung 8 über eine Gehäusebohrung direkt im Ventilgehäuse 1 und eignet sich insoweit für die feste Installation eines dauernden Druckwächters für jede Betriebsstellung des Kegelventiles 10 und des Dichtkegels 25 des Ventilstößels 11.
Die Ventilgehäuseöffnung 9 mündet dagegen direkt in einem um den flanschnahen Bereich des Ventilstößelschaftes 22 angeordneten Ringquerschnitt 42, der durch den Dichtkegel 25 des Ventilstößels 11 von den Ventilgehäusebohrungen 6, 7 fakultativ trennbar ist. Er ist insoweit für beliebige separate Zugriffe zum Kältemittelkreislauf, wie etwa Wartungshandlungen des Kältemittelkreislaufes, geeignet, ohne in andere Leitungen oder Ventile des Komressorabsperrventiles eingreifen zu müssen.
Die Achsen 28, 29 Ventilgehäuseöffnungen 8, 9 sind dabei in radialer und axialer Ausdehnung, bezogen auf die axiale Ausdehnung des Ventilstößelschaftes 20 des Ventilstößels 11, so angeordnet, daß sie die maximale Baulänge und Bauhöhe des Kompressorabsperrventiles nicht beeinflussen.

Fig. 3 zeigt schließlich eine um 180 Grad versetzte, alternative Anordnung der Ventilgehäuseöffnungen 8, 9, um bestimmten, variablen Einbauerfordernissen in mobilen Anlagenträgern optimal entsprechen zu können. So kann es beispielsweise vorteilhaft sein, einen an der Ventilgehäuseöffnung 8 anbringbaren Druckwächter gegenüber der in Fig. 2 gezeigten Position versetzt anzuordnen.

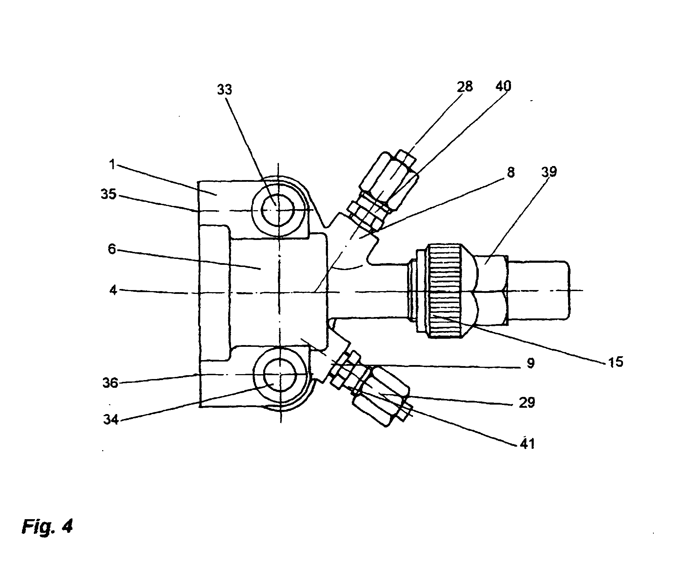

Fig. 4 der Zeichnung zeigt letztlich Ventilgehäuseöffnungen 8, 9 mit gegenüber Fig. 2 und 3 alternativen Einschraubstutzen 40, 41 zum Anschluß über ein ventilgehäuseseitiges innengewinde.

## Patentansprüche

1. Kompressorabsperrventil für korrosive und nichtkorrosive Stoffströme der industriellen Kälte- und Klimatechnik, insbesondere für gewichts- und raumminimierte mobile Anlagenträger, wie beispielsweise Fahrzeuge und Transportmittel aller Art, bestehend aus einem einstückigen Ventilgehäuse (1) mit zwei Ventilgehäusebohrungen (6,7) zur festen und lösbaren Anordnung mittels zweier Flanschanschlüsse (2,3) innerhalb eines Kältemittelkreislaufes außerhalb an einem Anlagenkompressor, wobei der Durchmesser einer Ventilgehäusebohrung (7) größer ist als der Durchmesser eines Kegelventiles (10), so dass die Montage eines Kegelventiles (10) und eines Ventilstößels (11) innerhalb des Ventilgehäuses (1) erfolgt; sowie zwei peripheren, verschließbaren Ventilgehäuseöffnungen (8,9) für disponible Zugänge zum Kältemittelkreislaufsystem des Ventilgehäuses (1); einem koaxial zu einer der beiden Ventilgehäusebohrungen (6,7) angeordneten, durch einen Ventilstößel (11) manuell betätigbarem Kegelventil (10) mit beidseitigen Kegelflächen zur fakultativen Abdichtung einer Ventilgehäusebohrung (6) einerseits; oder eines koaxial zu einer der Ventilgehäusebohrungen (6,7) nach außen führenden Ventilstößelschaftes (22) und einer in ihm mündenden peripheren Ventilgehäuseöffnung (9) andererseits; sowie einer verschraubbaren, hohlzylindrischen und selbstdichtenden Verschlußkappe (15) des Ventilstößelschaftes (22) von mindestens der axialen Länge des maximalen Ventilhubes des Ventilstößels (11), wobei die peripheren Ventilgehäuseöffnungen (8,9) in der Ebene der parallel zum Ventilstößelschaft (22) verlaufenden Flanschachse (4) des Ventilgehäuseflansches (2) und in axialer und radialer Ausdehnung um den Ventilstößelschaft (22), sowie innerhalb der maximalen äußeren Abmessungen des Ventilgehäuses (1), angeordnet sind; und, daß eine der peripheren Ventilgehäuseöffnungen (8) oder 9) direkt im Ventilgehäuse (1) mündet und eine der peripheren Ventilgehäuseöffnungen (8 oder 9) in einen zentrisch um die flanschnahe Seite des Ventilstößelschaftes (22) verlaufenden Ringquerschnitt (42) des Ventilstößelschaftes (22) mündet, so daß beide Ventilgehäuseöffnungen (8,9) am Umfang des Ventilstößelschaftes (22) beliebig verteilt anordenbar sind, sowie, daß die Ventilgehäuseflansche (2,3) und ein Hauptdichtkegel (17) der Ventilgehäusebohrung (6) des Ventilgehäuses (1); ein Dichtkegel (26) des Ventilstößelschaftes (22); ein Dichtkegel (18) für die Verschlußkappe (15); sowie zwei Dichtkegel (37) und (38) der peripheren Gehäuseöffnungen (8,9), mit dem Ventilgehäuse (1) aus einstückigem Leichtmetall, beispielsweise aus einem AL-Strangpreßhalbzeug, gefertigt sind.

2. Kompressorabsperrventil nach den Patentansprüchen 1, **dadurch gekennzeichnet**, daß der Ventilbund (31) des Ventilstoßels (11) und das Kegelventil (10) mit dem Sprengring (19) mit radialem und axialen Spiel gepaßt und montiert sind, derart, daß das Kegelventil (10) auf dem Hauptdichtkegel (17) verspannungsfrei, selbstzentrierend dichtend, aufsitzt, so daß die für eine funktionsbedingte Differenz zwischen Ventilbetriebskraft und Ventilsitzkraft erforderliche, manuell einbringbare Spindelkraft des Ventilstößels (10), bei verbesserter Dichtung, wie einzeln an sich bekannt, relativ reduziert ist.

3. Kompressorabsperrventil nach den Patentansprüchen 1 und 2, **dadurch gekennzeichnet,** daß der rückwärtige Strömungskegel des Kegelventils (10) um einen Winkelbetrag (γ) von der Normalen der Flanschachse (4) und der Ventilgehäusebohrung (6) abweicht.

## Claims

1. Compressor shut-off valve for corrosive and noncorrosive flows of material in industrial cryogenics and air conditioning, in particular for mobile system carriers minimized in terms of weight and space, such as, for example, vehicles and transport means of all types, consisting of a one-piece valve housing (1) with two valve-housing bores (6, 7) for fixed and releasable arrangement by means of two flange connections (2, 3) inside a refrigerant circuit on the outside of a system compressor, the diameter of one valve-housing bore (7) being greater than the diameter of a cone valve (10), so that a valve cone (10) and a valve plunger (11) are fitted inside the valve housing (1), and also two peripheral, closable valve-housing openings (8, 9) for available inlets to the refrigerant circuit system of the valve housing (1), a cone valve (10), which is arranged coaxially to one of the two valve-housing bores (6, 7), can be actuated manually by a valve plunger (11) and has cone surfaces on both sides for the facultative sealing of one valve-housing bore (6), on the one hand, or of a valve-plunger shaft (22), leading outwards coaxially to one of the valve-housing bores (6, 7), and of a peripheral valve-housing opening (9), opening out in the said valve-plunger shaft (22), on the other hand, and also a screw-on, hollow-cylindrical and self-sealing end cap (15) of the valve-plunger shaft (22) of at least the axial length of the maximum valve stroke of the valve plunger (11), the peripheral valve-housing openings (8, 9) being arranged in the plane of the flange axis (4), running parallel to the valve-plunger shaft (22), of the valve-housing flange (2) and in axial and radial extent around the valve-plunger shaft (22), and also within the maximum outer dimensions of the valve housing (1), and one of the peripheral valve-housing openings (8 or 9) opening out directly in the valve housing (1) and one of the peripheral valve-housing openings (8 or 9) opening out into an annular cross section (42) of the valve-plunger shaft (22), the said annular cross section (42) running concentrically around that side of the valve-plunger shaft (22) which is close to the flanges, so that both valve-housing openings (8, 9) can be arranged so as to be distributed in any desired manner on the circumference of the valve-plunger shaft (22), and the valve-housing flanges (2, 3) and a main sealing cone (17) of the valve-housing bore (6) of the valve housing (1), a sealing cone (26) of the valve-plunger shaft (22), a sealing cone (18) for the end cap (15), and two sealing cones (37) and (38) of the peripheral housing openings (8, 9) being produced in one piece with the valve housing (1) from a light alloy, for example from an extruded aluminium semifinished material.

2. Compressor shut-off valve according to Patent Claim 1, characterized in that the valve collar (31) of the valve plunger (11) and the valve cone (10) are fitted and assembled with the snap ring (19) with radial and axial play in such a way that the cone valve (10) sits on the main sealing cone (17) in a distortion-free, self-centring sealing manner, so that the spindle force of the valve plunger (10), which spindle force is required for a function-induced difference between valve operating force and valve seating force and can be introduced manually, is comparatively reduced, with improved sealing, as separately known per se.

3. Compressor shut-off valve according to Patent Claims 1 and 2, characterized in that the rear flow cone of the cone valve (10) deviates by an angular amount (γ) from the normal to the flange axis (4) and the valve-housing bore (6).

## Revendications

1. Vanne d'arrêt pour compresseur pour des courants de matière corrosifs et non corrosifs de la technique industrielle du froid et de la climatisation, en particulier pour des supports d'installation mobiles de poids et d'espace réduits, comme par exemple des véhicules et moyens de transport de tous types, se composant d'un boîtier de vanne d'une seule pièce (1) comprenant deux alésages (6, 7) de boîtier de vanne et destiné à être disposé de manière fixe et desserrable au moyen de deux raccords à bride (2, 3), à l'intérieur d'un circuit de fluide réfrigérant à l'extérieur sur un compresseur d'installation, le diamètre d'un alésage (7) de boîtier de vanne étant plus grand que le diamètre d'une vanne à boisseau (10), de sorte que l'on puisse monter une vanne à boisseau (10) et un poussoir de soupape (11) à l'intérieur du boîtier de vanne (1) ; ainsi que deux ouvertures de boîtier de vanne (8, 9) périphériques, obturables, pour permettre un accès disponible au système à circuit de fluide réfrigérant du boîtier de vanne (1) ; d'une vanne à boisseau (10) disposée coaxialement à l'un des deux alésages (6, 7) de boîtier de vanne, actionnable manuellement par un poussoir de soupape (11), ayant deux surfaces coniques de part et d'autre pour la fermeture hermétique facultative d'un alésage (6) de boîtier de vanne d'une part ; ou d'une tige-poussoir de soupape (22) conduisant coaxialement à l'un des alésages (6, 7) de boîtier de vanne vers l'extérieur et d'une ouverture (9) de boîtier de vanne périphérique débouchant dans celle-ci, d'autre part ; ainsi que d'un couvercle de fermeture (15) vissable, de forme cylindrique creuse et auto-étanchéifiant de la tige-poussoir de soupape (22) ayant au moins la longueur axiale de la course maximale de la soupape du poussoir de soupape (11), les ouvertures (8, 9) de boîtier de vanne périphériques étant disposées dans le plan de l'axe (4) de bride de la bride (2) du boîtier de soupape s'étendant parallèlement à la tige-poussoir de soupape (22), et dans l'extension axiale et radiale autour de la tige-poussoir de soupape (22), ainsi qu'en deçà des dimensions maximales extérieures du boîtier de soupape (1) ; et en ce que l'une des ouvertures (8 ou 9) de boîtier de soupape périphériques débouche directement dans le boîtier de soupape (1) et l'une des ouvertures (8 ou 9) de boîtier de soupape périphériques débouche dans une section transversale annulaire (42) de la tige-poussoir de soupape (22) s'étendant centralement autour du côté proche de la bride de la tige-poussoir de soupape (22), de sorte que les deux ouvertures (8, 9) de boîtier de soupape puissent être disposées sur la périphérie de la tige-poussoir de soupape (22) suivant une répartition quelconque, et que la bride (2, 3) de boîtier de soupape et un cône d'étanchéité principal (17) de l'alésage (6) de boîtier de soupape du boîtier de soupape (1) ; un cône d'étanchéité (26) de la tige-poussoir de soupape (22) ; un cône d'étanchéité (18) pour le couvercle de fermeture (15) ; ainsi que deux cônes d'étanchéité (37) et (38) des ouvertures de boîtier périphériques (8, 9), soient réalisés avec le boîtier de soupape (1) en métal léger d'une seule pièce, par exemple en un produit semi-fini extrudé en AL.

2. Vanne d'arrêt pour compresseur selon la revendication 1, **caractérisée en ce que** le collier de soupape (31) du poussoir de soupape (11) et la vanne à boisseau (10) sont adaptés et montés avec le jonc (19) avec un jeu radial et axial, de telle sorte que la vanne à boisseau (10) repose sur le cône d'étanchéité principal (17) sans contrainte, avec une étanchéité auto-centrée, de sorte que la force de vissage du poussoir de soupape (10), applicable manuellement, nécessaire pour une différence dépendant du fonctionnement entre la force d'actionnement de la soupape et la force de repos de la soupape, soit relativement réduite tout en offrant une étanchéité améliorée, comme cela est connu en soi séparément.

3. Vanne d'arrêt pour compresseur selon les revendications 1 et 2, **caractérisée en ce que** le cône d'écoulement vers l'arrière de la vanne à boisseau (10) s'écarte d'une valeur angulaire (ã) par rapport à la normale à l'axe de bride (4) et à l'alésage (6) du boîtier de soupape.
